# FASCICULE DE BREVET EUROPEEN

(11) **EP 2 917 518 B1**
(45) Date de publication et mention de la délivrance du brevet: **01.03.2017**
(21) Numéro de dépôt: 13795845.0
(22) Date de dépôt: 07.11.2013
(51) Int. Cl.: F01M 13/00, F01D 25/28, F01D 25/30

(54) **SUPPORT DE TUBE D'ÉVACUATION D'AIR DANS UNE TURBOMACHINE**
AUFNAHME EINES ENTLÜFTUNGSROHR EINER TURBOMACHINE
AIR EXHAUST TUBE HOLDER IN A TURBOMACHINE

(30) Priorité: 12.11.2012 FR 1260747
(43) Date de publication de la demande: 16.09.2015
(73) Titulaire: Snecma, 75015 Paris (FR)
(72) Inventeur: SULTANA, Patrick, F-77550 Moissy Cramayel Cedex (FR); BENSALAH, Boucif, F-77550 Moissy Cramayel Cedex (FR); DURAND, Yannick, F-77550 Moissy Cramayel Cedex (FR); RENON, Olivier, F-77550 Moissy Cramayel Cedex (FR)
(74) Mandataire: Robert, Mathias
(86) Numéro de dépôt international: PCT/FR2013/052663
(87) Numéro de publication internationale: WO 2014/072643

(56) Documents cités:
- EP-A1- 1 902 951
- EP-A1- 2 261 468
- US-A1- 2004 088 989
- US-A1- 2011 162 383
- US-A1- 2011 271 686

## Description

La présente invention concerne un support de tube d'évacuation d'air chargé en huile d'une turbomachine.

Une turbomachine, telle qu'un turboréacteur ou un turbopropulseur, comporte classiquement, d'amont en aval dans le sens d'écoulement des gaz, une soufflante, un compresseur basse pression, un compresseur haute pression, une chambre de combustion, une turbine haute pression, une turbine basse pression, et une tuyère d'échappement des gaz. A chaque étage de compresseur correspond un étage de turbine, les deux étant reliés par un arbre de façon à former un corps, en particulier un corps basse pression et un corps haute pression.

L'arbre du corps basse pression peut être creux et contenir un tube, couramment appelé « Center Vent Tube » ou « CVT ». Ce tube comporte une partie amont mobile en rotation, prolongée par une partie aval fixe et permet l'évacuation d'air chargé en huile, issu de certaines enceintes de la turbomachine.

La partie aval de ce tube traverse un cône d'éjection auquel il est relié par un support comportant une partie annulaire interne de section générale en Oméga, entourant le tube, et une partie conique fixée au cône d'éjection et à la partie annulaire interne. La partie conique comporte des trous de passage d'un débit d'air de refroidissement traversant le cône d'éjection. En outre, la partie conique du support est fixée à la partie annulaire interne par l'intermédiaire de vis.

Un tel support présente les inconvénients suivants.

Tout d'abord, la zone d'appui du tube sur le support est décalée axialement de la zone de fixation du support sur le cône d'éjection, ce qui diminue fortement la rigidité du support. Cette rigidité est encore réduite par la présence des trous permettant le passage du débit d'air de refroidissement.

Le cône d'éjection est soumis à des températures comprises entre 650°C et 680°C, alors que le tube peut être à une température comprise entre 450°C et 480°C. Cette différence de température importante (240°C) génère des phénomènes de dilatation thermique, des contraintes et des déplacements que le support doit pouvoir absorber tout en conservant ses qualités de rigidité.

Pour parvenir à un tel compromis, le support actuel est relativement lourd, ce qui augmente la masse totale de la turbomachine, en plus d'être coûteux.

L'invention a notamment pour but d'apporter une solution simple, efficace et économique à ce problème.

A cet effet, elle propose un support destiné à porter un tube d'évacuation d'air chargé en huile d'une turbomachine, comportant une partie annulaire radialement interne, destinée à être montée autour dudit tube, caractérisé en ce qu'il comporte des ailettes s'étendant vers l'extérieur et dans un plan radial depuis la partie annulaire, en formant un angle avec la direction radiale, les ailettes comportant des zones de fixation à leur périphérie externe, lesdites zones de fixation étant inclinées dans la direction axiale du support de façon à pouvoir être fixées à un cône d'éjection de la turbomachine.

De cette manière, la zone d'appui du tube sur le support est située axialement au droit de la zone de fixation du support sur le cône d'éjection, ce qui permet au support d'avoir une bonne rigidité. Le fait que les ailettes soient inclinées par rapport à la direction radiale permet en outre de pouvoir supporter convenablement les effets de dilatations thermiques pouvant se produire en fonctionnement. Enfin, un tel support est relativement léger, permet le passage de l'air de refroidissement dans le cône d'éjection, et est peu coûteux. A titre de comparaison, un tel support est environ dix fois plus léger que le support actuel.

Selon une caractéristique de l'invention, les zones de fixation présentent chacune la forme d'une portion de cône.

De plus, chaque ailette peut comporter une zone médiane comportant une première extrémité reliée à une zone interne de fixation, destinée à être fixée à la partie annulaire interne du support, et une seconde extrémité reliée à la zone externe de fixation, destinée à être fixée au cône d'éjection, la zone médiane s'étendant dans un plan formant un angle non droit par rapport à la tangente à la partie annulaire passant par la première extrémité.

Une telle caractéristique permet au support de bien encaisser les effets des dilatations thermiques.

Chaque zone médiane peut s'étendre dans un plan parallèle à l'axe de la partie annulaire interne.

Les zones médianes offrent ainsi peu de résistance au flux d'air traversant le cône d'éjection.

En outre, chaque zone interne de fixation a une forme complémentaire de celle de la partie annulaire interne.

Les zones internes des ailettes peuvent être fixées par brasage par exemple à la zone annulaire interne.

Avantageusement, les ailettes et la partie annulaire interne sont réalisées en superalliage à base de Nickel, par exemple en INCONEL 625 ou en INCONEL 718.

De préférence, la longueur de la partie annulaire interne est inférieure ou égale à 0,4 fois son diamètre interne.

De cette manière, la partie annulaire interne est un guidage court formant, dans une certaine mesure, une liaison rotule entre le tube et le support.

A titre d'exemple, le nombre d'ailettes peut être compris entre 3 et 10.

L'invention concerne également un ensemble pour une turbomachine, comportant un tube d'évacuation d'air chargé en huile, ledit tube comportant une partie amont mobile en rotation et une partie aval fixe, ladite partie aval traversant un cône d'éjection et s'étendant selon l'axe dudit cône d'éjection, ladite partie aval étant entourée par la partie annulaire interne d'un support du type précité, de façon à ce que ladite partie aval soit montée axialement libre en rotation et en translation dans ladite partie annulaire interne, les zones de fixation inclinées du support étant en outre fixées au cône d'éjection.

L'invention concerne enfin une turbomachine, caractérisée en ce qu'elle comporte un ensemble décrit ci-dessus.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective et en coupe axiale, d'une partie d'une turbomachine actuelle,
- la figure 2 est une vue en coupe axiale illustrant le montage d'un support actuel entre un cône d'éjection et un tube d'évacuation d'air chargé en huile,
- la figure 3 est une vue en perspective et avec arrachement partiel, du montage de la figure 2,
- la figure 4 est une vue en perspective d'un support selon l'invention,
- la figure 5 est une vue en perspective d'une ailette du support selon l'invention,
- la figure 6 est une vue en perspective d'une partie annulaire du support selon l'invention,
- la figure 7 est une vue de détail illustrant le montage d'une ailette sur ladite partie annulaire,
- la figure 8 est une vue en perspective et en arrachement partiel, d'une partie d'une turbomachine selon l'invention.

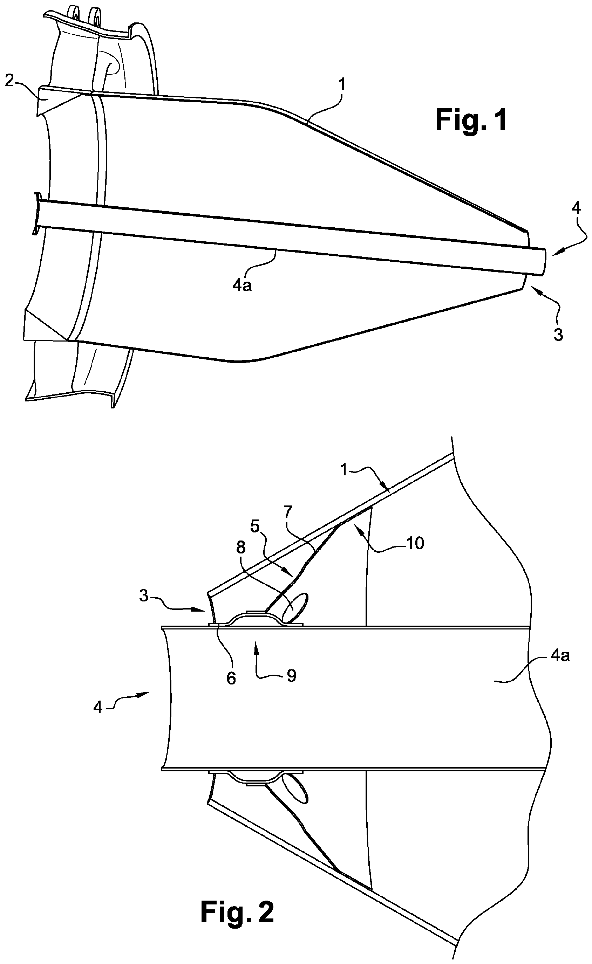

Une partie aval d'une turbomachine actuelle est représentée à la figure 1 et comporte un cône d'éjection 1 fixé en aval d'un carter d'échappement 2, lui-même situé en aval d'une turbine basse-pression (non représentée). Le cône d'éjection 1 comporte une ouverture axiale 3 à son extrémité aval.

La turbomachine comporte également un tube 4 appelé couramment « Center Vent Tube » ou « CVT » qui comporte une partie amont mobile en rotation (non visible), prolongée par une partie aval fixe 4a et qui permet l'évacuation d'air chargé en huile, issu de certaines enceintes de la turbomachine.

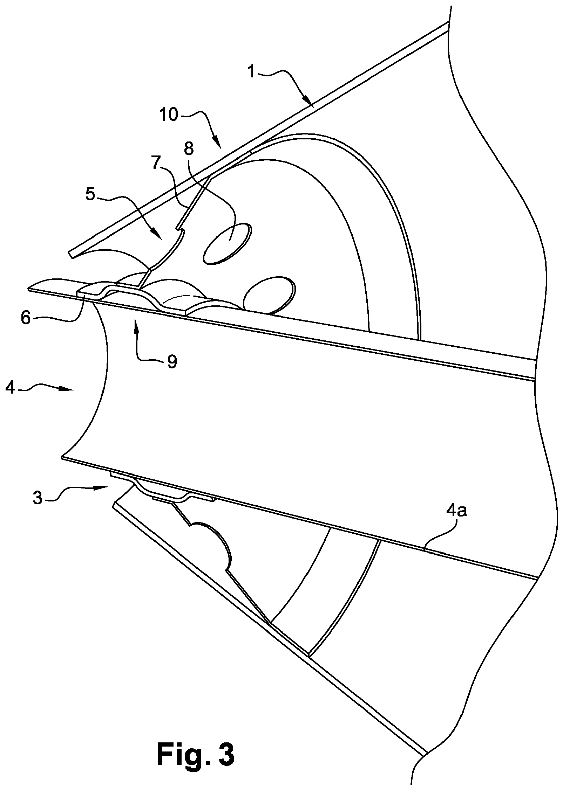

La partie aval 4a de ce tube 4 traverse le cône d'éjection 1 et débouche en aval de celui-ci au travers de l'ouverture 3. Ladite partie aval 4a est reliée au cône d'éjection 1 par un support 5. Ce dernier est visible à aux figures 2 et 3 et comporte une partie annulaire interne 6 de section générale en Oméga, entourant le tube 4, et une partie conique 7 fixée au cône d'éjection 1 et à la partie annulaire interne 6. La partie conique 7 comporte des trous 8 permettant le passage d'un débit d'air de refroidissement traversant le cône d'éjection 1. En outre, la partie conique 7 du support 5 est fixée à la partie annulaire interne 6 par l'intermédiaire de vis, non représentées.

Comme indiqué précédemment, la zone d'appui 9 du tube 4 sur un tel support 5 est décalée axialement de la zone de fixation 10 du support 5 sur le cône d'éjection 1, ce qui diminue fortement la rigidité du support 5. Cette rigidité est encore réduite par la présence des trous 8 permettant le passage du débit d'air de refroidissement. Par ailleurs, un tel support 5 est relativement lourd, ce qui augmente la masse totale de la turbomachine, en plus d'être coûteux.

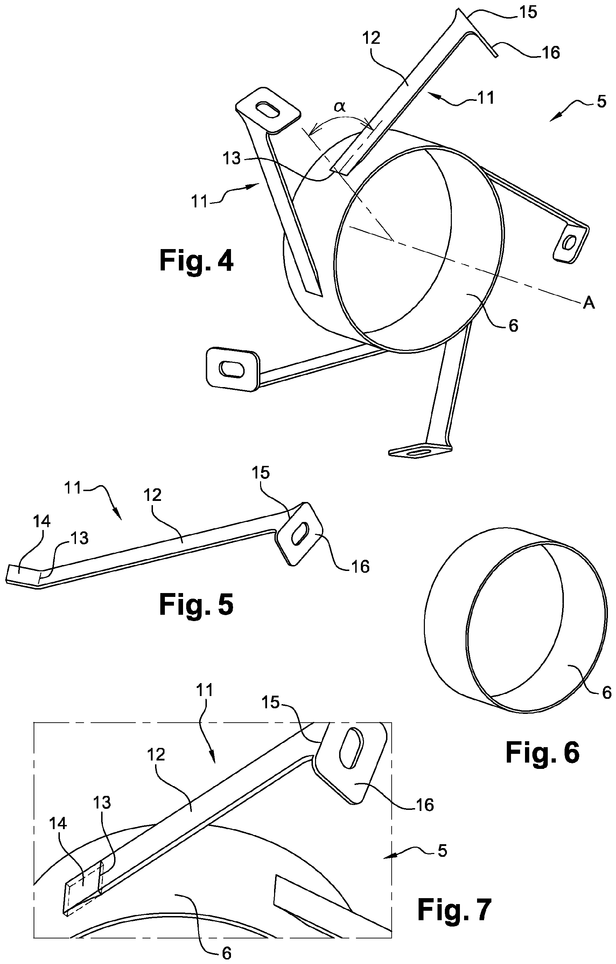

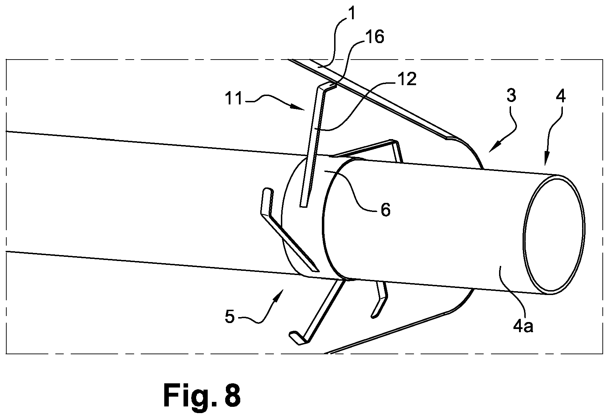

Afin de remédier à ces inconvénients, l'invention propose de relier la partie aval 4a du tube 4 au cône d'éjection 1 par le support 5 illustré aux figures 4 à 8. Ce support 5 comporte une partie annulaire cylindrique 6 radialement interne, destinée à être montée autour dudit tube 4, et des ailettes 11 s'étendant vers l'extérieur et dans un plan radial depuis la partie annulaire 6, en formant un angle α avec la direction radiale. Le nombre d'ailettes 11 est par exemple compris entre 3 et 10.

Chaque ailette 11 comporte une zone médiane 12 comportant une première extrémité 13 reliée à une zone interne de fixation 14, destinée à être fixée axialement au milieu de la partie annulaire interne 6 du support 5, et une seconde extrémité 15 reliée à une zone externe de fixation 16, destinée à être fixée au cône d'éjection 1, par exemple par vissage, rivetage ou brasage. La zone médiane 12 s'étendant dans un plan formant un angle non droit par rapport à la tangente à la partie annulaire 6 passant par la première extrémité 13. Par ailleurs, chaque zone médiane 12 s'étend dans un plan parallèle à l'axe A de la partie annulaire interne 6.

De plus, la zone externe de fixation 16 a une forme de portion de cône, complémentaire de la surface interne du cône d'éjection 1 et la zone interne de fixation 14 a une forme complémentaire de celle de la partie annulaire interne 6.

La partie annulaire 6 peut également comporter des chanfreins tournés radialement vers l'intérieur, au niveau de ses extrémités, de manière à ne pas endommager le tube 4 lors du montage du support 5.

De préférence, les ailettes 11 et la partie annulaire interne 6 sont réalisées en superalliage à base de Nickel, par exemple en INCONEL 625 (NiCr22Mo9Nb) ou en INCONEL 718, et les zones internes de fixation 14 des ailettes 11 sont brasées sur la partie annulaire interne 6. En outre, la longueur de la partie annulaire interne 6 est inférieure ou égale à 0,4 fois son diamètre interne. De cette manière, la partie annulaire interne 6 est un guidage court formant, dans une certaine mesure, une liaison rotule entre le tube 4 et le support 5. Le tube 4 est également monté libre en rotation et en translation axiale dans la partie annulaire interne 6. Ces différents degrés de liberté permettent notamment de compenser les éventuelles déformations en fonctionnement, dues par exemple aux contraintes mécaniques et thermiques.

On remarque que, dans le support 5 de l'invention, la zone d'appui du tube 4 sur le support 5 est située axialement au droit de la zone de fixation du support 5 sur le cône d'éjection 1, ce qui permet au support 5 d'avoir une bonne rigidité. Le fait que les ailettes 11 soient inclinées par rapport à la direction radiale permet en outre de supporter convenablement les effets de dilatations thermiques pouvant se produire en fonctionnement. Enfin, un tel support 5 est relativement léger, permet le passage de l'air de refroidissement dans le cône d'éjection 1, et est peu coûteux. A titre de comparaison, un tel support 5 est environ dix fois plus léger que le support actuel illustré aux figures 2 et 3.

## Revendications

1. Support (5) destiné à porter un tube (4) d'évacuation d'air chargé en huile d'une turbomachine, comportant une partie annulaire (6) radialement interne, destinée à être montée autour dudit tube (4), **caractérisé en ce qu'**il comporte des ailettes (11) s'étendant vers l'extérieur et dans un plan radial depuis la partie annulaire (6), en formant un angle (α) avec la direction radiale, les ailettes (11) comportant des zones de fixation (16) à leur périphérie externe, lesdites zones de fixation (16) étant inclinées dans la direction axiale (A) du support (5) de façon à pouvoir être fixées à un cône d'éjection (1) de la turbomachine.

2. Support (5) selon la revendication 1, **caractérisé en ce que** les zones de fixation (16) présentent chacune la forme d'une portion de cône.

3. Support (5) selon la revendication 1 ou 2, **caractérisé en ce que** chaque ailette (11) comporte une zone médiane (12) ayant une première extrémité (13) reliée à une zone interne de fixation (14), destinée à être fixée à la partie annulaire interne (6) du support (5), et une seconde extrémité (15) reliée à la zone externe de fixation (16), destinée à être fixée au cône d'éjection (1), la zone médiane (12) s'étendant dans un plan formant un angle non droit avec une tangente à la partie annulaire (6) passant par la première extrémité (13).

4. Support (5) selon la revendication 3, **caractérisé en ce que** chaque zone médiane (12) s'étend dans un plan parallèle à l'axe (A) de la partie annulaire interne (6).

5. Support (5) selon la revendication 3 ou 4, **caractérisé en ce que** chaque zone interne de fixation (14) a une forme complémentaire de celle de la partie annulaire interne (6).

6. Support (5) selon l'une des revendications 1 à 5, **caractérisé en ce que** les ailettes (11) et la partie annulaire interne (6) sont réalisées en superalliage à base de Nickel, par exemple en INCONEL 625 ou en INCONEL 718.

7. Support (5) selon l'une des revendications 1 à 6, **caractérisé en ce que** la longueur de la partie annulaire interne (6) est inférieure ou égale à 0,4 fois son diamètre interne.

8. Support (5) selon l'une des revendications 1 à 7, **caractérisé en ce que** le nombre d'ailettes (11) est compris entre 3 et 10.

9. Ensemble pour une turbomachine comportant un tube (4) d'évacuation d'air chargé en huile d'une turbomachine, ledit tube (4) comportant une partie amont mobile en rotation et une partie aval fixe (4a), ladite partie aval (4a) traversant un cône d'éjection (1) et s'étendant selon l'axe (A) dudit cône d'éjection (1), ladite partie aval (4a) étant entourée par la partie annulaire interne (6) d'un support (5) selon l'une des revendications 1 à 8, de façon à ce que ladite partie aval (4a) soit montée axialement libre en rotation et en translation dans ladite partie annulaire interne (6), les zones de fixation inclinées (16) du support (5) étant en outre fixées au cône d'éjection (1).

10. Turbomachine, **caractérisée en ce qu'**elle comporte un ensemble selon la revendication 9.

## Patentansprüche

1. Halterung (5) eines Abluftrohrs eines Turbinentriebwerks für ölhaltige Luft, welche einen in Radialrichtung inneren ringförmigen Teil (6) umfasst, der um besagtes Rohr (4) montiert wird, **dadurch gekennzeichnet, dass** sie Rippen (11) enthält, die sich auf einer radialen Ebene vom ringförmigen Teil (6) aus nach außen erstrecken und in radialer Richtung einen Winkel (α) bilden, wobei die Rippen (11) an ihrem Außenrand Befestigungsbereiche (16) aufweisen, und besagte Befestigungsbereiche (16) in axialer Richtung (A) der Halterung (5) geneigt sind, so dass sie an einem Abgaskegel (1) des Turbinentriebwerks befestigt werden können.

2. Halterung (5) nach Anspruch 1, **dadurch gekennzeichnet, dass** die Befestigungsbereiche (16) jeweils die Form eines konischen Abschnitts aufweisen.

3. Halterung (5) nach Anspruch 1 oder 2, **dadurch gekennzeichnet, dass** jede Rippe (11) einen Mittelbereich (12) aufweist, dessen eines, mit einem inneren Befestigungsbereich (14) verbundenes Ende (13) dazu bestimmt ist, am inneren ringförmigen Bereich (6) der Halterung (5) befestigt zu werden, und dessen anderes, mit einem äußeren Befestigungsbereich (16) verbundene Ende (15) dazu bestimmt ist, mit dem Abgaskegel (1) verbunden zu werden, wobei der Mittelbereich (12) in einer Ebene verläuft, die in einem ungeraden Winkel zur Tangente steht, die am ringförmigen Teil (6) durch das erste Ende (13) läuft.

4. Halterung (5) nach Anspruch 3, **dadurch gekennzeichnet**, das jeder Mittelbereich in (12) einer Ebene liegt, die parallel zur Achse (A) des inneren ringförmigen Teils (6) verläuft.

5. Halterung (5) nach Anspruch 3 oder 4, **dadurch gekennzeichnet, dass** jeder innere Befestigungsbereich (14) zur Form des inneren ringförmigen Teils (6) komplementär ist.

6. Halterung (5) nach einem der Ansprüche 1 bis 5, **dadurch gekennzeichnet, dass** die Rippen (11) und der innere ringförmige Teil (6) aus einer Nickel-Superlegierung hergestellt sind, zum Beispiel aus INCONEL 625 oder INCONELK 718.

7. Halterung (5) nach einem der Ansprüche 1 bis 6, **dadurch gekennzeichnet dass** die Länge des inneren ringförmigen Teils (6) kleiner/gleich 0,4 Mal der Innendurchmesser ist.

8. Halterung (5) nach einem der Ansprüche 1 bis 7, **dadurch gekennzeichnet, dass** die Anzahl der Rippen (11) zwischen 3 und 10 beträgt.

9. Einheit für eine Turbomaschine, die ein Abzugsrohr (4) eines Turbinentriebwerks für ölhaltige Luft umfasst, wobei besagtes Rohr (4) einen stromaufwärtigen drehbaren Teil und einen stromabwärtigen feststehenden Teil (4a) umfasst, wobei besagter stromaufwärtiger Teil (4a) durch einen Abgaskegel (1) führt und sich an der Achse (A) besagten Abgaskegels (1) entlang erstreckt, und besagter stromabwärtiger Teil (4a) vom inneren ringförmigen Teil (6) einer Halterung (5) nach einem der Ansprüche 1 bis 8 umgeben ist, so dass besagter stromabwärtiger Teil (4a) axial frei drehend und translatorisch in besagten inneren ringförmigen Teil (6) montiert wird, und die geneigten Befestigungsbereiche (16) von Halterung (5) des Weiteren am Abgaskegel (1) befestigt sind.

10. Turbomaschine, **dadurch gekennzeichnet, dass** sie eine Einheit nach Anspruch 9 umfasst.

## Claims

1. A support (5) for carrying a tube (4) for discharging oil-laden air from a turbine engine, the support comprising a radially inner annular portion (6) for mounting around said tube (4) and being **characterized in that** it includes fins (11) extending outwards in a radial plane from the annular portion (6), each fin forming an angle (α) relative to the radial direction, the fins (11) having fastener zones (16) at their outer peripheries, said fastener zones (16) being inclined in the axial direction (A) of the support (5) so as to be suitable for fastening to an exhaust cone (1) of the turbine engine.

2. A support (5) according to claim 1, **characterized in that** each of the fastener zones (16) presents the shape of a portion of a cone.

3. A support (5) according to claim 1 or claim 2, **characterized in that** each fin (11) has a middle zone (12) with a first end (13) connected to an inner fastener zone (14) for fastening to the inner annular portion (6) of the support (5), and a second end (15) connected to the outer fastener zone (16) for fastening to the exhaust cone (1), the middle zone (12) extending in a plane forming an angle that is not a right angle with a tangent to the annular portion (6) passing through the first end (13).

4. A support (5) according to claim 3, **characterized in that** each middle zone (12) extends in a plane parallel to the axis (A) of the inner annular portion (6).

5. A support (5) according to claim 3 or claim 4, **characterized in that** each inner fastener zone (14) is of a shape complementary to the shape of the inner annular portion (6).

6. A support (5) according to any one of claims 1 to 5, **characterized in that** the fins (11) and the inner annular portion (6) are made of a nickel-based superalloy, e.g. out of Inconel 625 or out of Inconel 718.

7. A support (5) according to any one of claims 1 to 6, **characterized in that** the length of the inner annular portion (6) is less than or equal to 0.4 times its inside diameter.

8. A support (5) according to any one of claims 1 to 7, **characterized in that** the number of fins (11) lies in the range three to ten.

9. An assembly for a turbine engine having a tube (4) for discharging oil-laden air from a turbine engine, said tube (4) comprising an upstream portion that is movable in rotation and a downstream portion (4a) that does not rotate, said downstream portion (4a) passing through an exhaust cone (1) and extending along the axis (A) of said exhaust cone (1), said downstream portion (4a) being surrounded by the inner annular portion (6) of a support (5) according to any one of claims 1 to 8 so that said downstream portion (4a) is mounted to be free to move axially in translation and in rotation in said inner annular portion (6), the sloping fastener zones (16) of the support (5) also being fastened to the exhaust cone (1).

10. A turbine engine, **characterized in that** it includes an assembly according to claim 9.
